(19)

**Europäisches Patentamt**
**European Patent Office**
**Office européen des brevets**

(11) **EP 4 610 597 A1**

(12) **EUROPEAN PATENT APPLICATION**

(43) Date of publication:
**03.09.2025 Bulletin 2025/36**

(21) Application number: **25159647.4**

(22) Date of filing: **24.02.2025**

(51) International Patent Classification (IPC):
**G01C 21/34** (2006.01)    **G06Q 10/04** (2023.01)
**G06Q 10/047** (2023.01)    **G06Q 10/0631** (2023.01)
**G06Q 50/06** (2024.01)    **G06Q 50/40** (2024.01)

(52) Cooperative Patent Classification (CPC):
**G01C 21/3469; G06Q 10/04; G06Q 10/047;**
**G06Q 10/0631; G06Q 10/06315; G06Q 50/06;**
**G06Q 50/40**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **27.02.2024 IN 202421014307**

(71) Applicant: **Tata Consultancy Services Limited**
**Maharashtra (IN)**

(72) Inventors:
• **MENON, VISHNU PADMAKUMAR**
**411057 Pune (IN)**

• **BICHPURIYA, YOGESH KUMAR**
**411057 Pune (IN)**
• **MISRA, PRASANT KUMAR**
**560066 Bengaluru (IN)**
• **SARANGAN, VENKATESH**
**600113 Chennai (IN)**
• **SAVARI RAJAN, ANTONY JEGAN FERNANDO**
**600096 Chennai (IN)**
• **RAVEENDRAN, REJITHA**
**560066 Bengaluru (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND SYSTEM FOR OPTIMIZING POWER PROCUREMENT FOR ENTERPRISES WITH ELECTRICAL VEHICLE FLEET CHARGING LOAD**

(57) Accurate estimation of average procurement cost becomes increasingly pivotal to ensure optimal procurement of electricity for an enterprise owning EV fleets. Existing techniques available for joint optimization of EV routing and charging are not usable for enterprise with EV fleet charging loads as cost of electricity is assumed to be independent of the EV charging demand. Further, they require total demand to be known a priori. Present disclosure provides a method and a system for optimizing power procurement for enterprises with electric vehicle fleet charging load. The system first performs a route optimization by modelling set of routing constraints which are then used to obtain optimal EV routes. Thereafter, system performs a procurement cost optimization by modelling set of procurement constraints using the plurality of inputs and the optimal EV routes to obtain an allocation information of each external energy source which is then utilized to obtain final procurement cost.

FIG. 3A

EP 4 610 597 A1

**Description**

CROSS-REFERENCE TO RELATED APPLICATIONS AND PRIORITY

The present application claims priority to Indian application no. 202421014307, filed on February 27,2024.

TECHNICAL FIELD

The disclosure herein generally relates to power procurement optimization, and, more particularly, to a method and a system for optimizing power procurement for enterprises with electric vehicle fleet charging load.

BACKGROUND

With the deregulation of electric utility industry, large consumers, such as logistics service provider owning a fleet of electric vehicles have the option of procuring their electricity needs from a variety of sources including electricity markets. Optimizing the electricity procurement cost of such a customer is non-trivial as their demand is influenced by both conventional loads, such as building lighting, air conditioning, computers, etc. as well as EV fleet charging load. And, to procure power optimally across the available sources, the overall demand profile of the customer should be known.

However, the customer's demand component that is induced by EV charging depends on the fraction of the charging load offloaded to the third party charging points lying outside of the customer enterprise. This offloading fraction, in turn, is determined by several factors including: (i) the availability of charging points along the EV routes, (ii) constraints on the goods to be delivered by each EV, and (iii) the cost of electricity at the external charging points in relation to the enterprise charging points. Thus, a mutual dependency exists between the three components of source selection, fleet routing and demand profile shaping when optimizing the power procurement of enterprises with EV fleets which makes the problem of optimizing power procurement of customers with EV fleets lot harder.

Some existing approaches available for joint optimization of EV routing and charging minimize the cost of charging, travel distance, time etc., while modelling the constraints related to routes, fleet operations, EV charging rate, state of charge, and capacity. However, in these approaches, the cost of electricity is assumed to be independent of the EV charging demand which does not hold good for the enterprises with electrical vehicle fleet charging load. Further, these approaches do not consider the impact of utilizing a parked EV's battery (as a static storage) for reducing the electricity cost of the enterprise.

SUMMARY

Embodiments of the present disclosure present technological improvements as solutions to one or more of the above-mentioned technical problems recognized by the inventors in conventional systems. For example, in one aspect, there is provided a method for optimizing power procurement for enterprises with electric vehicle fleet charging load. The method comprises receiving, by a system via one or more hardware processors, a plurality of inputs from a source system, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and external generation data; iteratively performing: modelling, by the system via the one or more hardware processors, a set of routing constraints based on the number of nodes, the number of EVs, the node details of each node, the distance matrix, the average procurement cost, the one or more EV parameters and the one or more cost parameters; modelling, by the system via the one or more hardware processors, a first objective function with minimization of each of distance travelled by each EV present in the fleet of EVs and a charging cost of each EV based on the plurality of inputs and the modelled set of routing constraints; solving, by the system via the one or more hardware processors, the first objective function to obtain one or more optimal EV routes and values of one or more variables at the one or more optimal EV routes using an interior point technique, wherein the one or more variables comprises an arrival time of each EV, and an EV State of Charge (SoC); modelling, by the system via one or more hardware processors, a set of procurement constraints based on the number of nodes, the number of EVs, the one or more EV parameters, the one or more cost parameters, the enterprise demand data, the enterprise generation data, and the external generation data; modelling, by the system via the one or more hardware processors, a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes and the modelled set of procurement constraints; solving, by the system via the one or more hardware processors, the second objective function to obtain an allocation information of each external energy source and a total cost of energy procurement using the interior point technique; computing, by the system via the one or more hardware processors, an updated average procurement cost based on the allocation information of each external energy source and the total cost of energy procurement; calculating, by the system via the one or more hardware processors, a cost difference between the updated average procurement cost and the average procurement cost; determining, by the system via the one or more hardware processors, whether the cost difference is less than a predefined tolerance value; and upon determining that the cost difference is not less than the predefined tolerance value, updating, by the system via the one or more hardware processors, the average procurement cost as the updated average procurement cost, until the cost difference is found to be less than the predefined tolerance value; and identifying, by the system via the one or more hardware processors, the updated average procurement cost as a final procurement cost of charging EVs and meeting enterprise demand.

In an embodiment, the method comprises: providing, by the system via the one or more hardware processors, the allocation information of each external energy source and the new procurement cost to the source system.

In an embodiment, wherein the modelled set of routing constraints comprise a customer node visit constraint, an EV entry-exit constraint, a time feasibility constraint, a customer node SoC feasibility constraint, a charging node SoC feasibility constraint, a discharging node SoC feasibility constraint, a demand fulfilment constraint, a time-window constraint, an EV carrying capacity constraint, an EV charging time constraint, and an EV discharging time constraint.

In an embodiment, wherein the modelled set of procurement constraints comprise a demand-supply balance constraint, a solar procurement constraint, battery SoC constraints, battery charging-discharging constraints, EV charging-discharging constraints, EV charging-discharging limit constraints, and a non-negativity constraint.

In another aspect, there is provided a system for optimizing power procurement for enterprises with electric vehicle fleet charging load. The system comprises a memory storing instructions; one or more communication interfaces; and one or more hardware processors coupled to the memory via the one or more communication interfaces, wherein the one or more hardware processors are configured by the instructions to: a plurality of inputs from a source system, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and external generation data; iteratively perform: model a set of routing constraints based on the number of nodes, the number of EVs, the node details of each node, the distance matrix, the average procurement cost, the one or more EV parameters and the one or more cost parameters; model a first objective function with minimization of each of distance travelled by each EV present in the fleet of EVs and a charging cost of each EV based on the plurality of inputs and the modelled set of routing constraints; solve the second objective function to obtain one or more optimal EV routes and values of one or more variables at the one or more optimal EV routes using an interior point technique, wherein the one or more variables comprises an arrival time of each EV, and an EV SoC; model a set of procurement constraints based on the number of nodes, the number of EVs, the one or more EV parameters, the one or more cost parameters, the enterprise demand data, the enterprise generation data, and the external generation data; model a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes and the modelled set of procurement constraints; solve the second objective function to obtain an allocation information of each external energy source and a total cost of energy procurement using the interior point technique; compute an updated average procurement cost based on the allocation information of each external energy source and the total cost of energy procurement; calculate a cost difference between the updated average procurement cost and the average procurement cost; determine whether the cost difference is less than a predefined tolerance value; and upon determining that the cost difference is not less than the predefined tolerance value, update the average procurement cost as the updated average procurement cost, until the cost difference is found to be less than the predefined tolerance value; and identify the updated average procurement cost as a final procurement cost of charging EVs and meeting enterprise demand.

In yet another aspect, there are provided one or more non-transitory machine-readable information storage mediums comprising one or more instructions which when executed by one or more hardware processors optimize power procurement for enterprises with electric vehicle fleet charging load by receiving, by a system via one or more hardware processors, a plurality of inputs from a source system, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and external generation data; iteratively performing: modelling, by the system via the one or more hardware processors, a set of routing constraints based on the number of nodes, the number of EVs, the node details of each node, the distance matrix, the average procurement cost, the one or more EV parameters and the one or more cost parameters; modelling, by the system via the one or more hardware processors, a first objective function with minimization of each of distance travelled by each EV present in the fleet of EVs and a charging cost of each EV based on the plurality of inputs and the modelled set of routing constraints; solving, by the system via the one or more hardware processors, the first objective function to obtain one or more optimal EV routes and values of one or more variables at the one or more optimal EV routes using an interior point technique, wherein the one or more variables comprises an arrival time of each EV, and an EV SoC; modelling, by the system via one or more hardware processors, a set of procurement constraints based on the number of nodes, the number of EVs, the one or more EV parameters, the one or more cost parameters, the enterprise demand data, the enterprise generation data, and the external generation data; modelling, by the system via the one or more hardware processors, a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes and the modelled set of procurement constraints; solving, by the system via the one or more hardware processors, the second objective function to obtain an allocation information of each external energy source and a total cost of energy procurement using the interior point technique; computing, by the system via the one or more hardware processors, an updated average procurement cost based on the allocation information of each external energy source and the total cost of energy procurement; calculating, by the system via the one or more hardware processors, a cost difference between the updated average procurement cost and the average procurement cost; determining, by the system via the one or more hardware processors, whether the cost difference is less than a predefined tolerance value; and upon determining that the cost difference is not less than the predefined tolerance value, updating, by the system via the one or more hardware processors, the average procurement cost as the updated average procurement cost, until the cost difference is found to be less than the predefined tolerance value; and identifying, by the system via the one or more hardware processors, the updated average procurement cost as a final procurement cost of charging EVs and meeting enterprise demand.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an example representation of an environment, related to at least some example embodiments of the present disclosure.

FIG. 2 illustrates an exemplary block diagram of a system for optimizing power procurement for enterprises with electric vehicle fleet charging load, in accordance with an embodiment of the present disclosure.

FIG. 3A illustrates a flow diagram representation of an estimation process performed by the system of FIG. 2 for estimating an average procurement cost for the enterprise having a fleet of EVs, in accordance with an embodiment of the present disclosure.

FIG. 3B illustrates a schematic representation of an estimation process performed by the system of FIG. 2 for estimating the average procurement cost and source allocation for the enterprise having the fleet of EVs, in accordance with an embodiment of the present disclosure.

FIGS. 4A, 4B and 4C, collectively illustrate an exemplary flow diagram of a method for optimizing power procurement for enterprises with electric vehicle fleet charging load, in accordance with an embodiment of the present disclosure.

FIG. 5 illustrates an example representation of nodes and routes followed by EVs, in accordance with an embodiment of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Large consumers can procure electricity from multiple sources, such as retailers, captive renewables, and pool markets. The electricity procurement cost of such large consumers comprise of regular loads and electric vehicle (EV) fleet charging loads. The EVs transport goods as well as energy stored in their batteries across locations. To procure power optimally across multiple sources, the overall demand requirements of the consumer/enterprise should be known. However, the enterprise's demand component induced by EV charging depends on (i) constraints on the goods to be delivered by each EV, (ii) the availability of charging points along the EV routes, and (iii) the cost of electricity at the external charging points and enterprise charging points. Thus, a cyclic dependency exists between source selection and demand requirements when optimizing the power procurement of enterprises with EV fleets which makes the problem of optimizing the power procurement of customers with EV fleets lot harder.

Several algorithms that are available for optimizing the power procurement portfolio may use standard portfolio optimization models, such as Markowitz Portfolio Theory or Conditional Value-at-Risk (CVaR). These portfolio optimization models mainly consider the price risk but require the procurement amount i.e., the total demand to be known a priori which makes them unusable for enterprises considered here. Some techniques available for portfolio optimization with EV and renewable energy to power a micro-grid used Sortino ratio which considers power flow constraints and uncertainties in solar, wind and EV charging/discharging. However, they haven't considered the business constraints involved in delivering goods and energy by the EV fleet.

Other existing techniques, which jointly optimize EV routing and procurement charges, assume the cost of electricity to be independent of the EV charging demand which does not hold good for the enterprise with electrical vehicle fleet charging load

So, a technique that can optimize the electricity procurement cost of an enterprise owning fleet of EVs while meeting their electricity demand is still to be explored.

Embodiments of the present disclosure overcome the above-mentioned disadvantages by providing a method and a system for optimizing power procurement for enterprises with electric vehicle fleet charging load. The system of the present disclosure decomposes the problem into two connected sub-problems. A first routing subproblem assumes the average cost of charging an EV to be known and uses this information to optimize the EV routes that satisfy a plurality of routing constraints. A second procurement optimization sub-problem assumes the routes of the various EVs to be fixed and uses this input to optimize the cost of electricity procurement along with charge/discharge profiles of the EVs at various nodes. The output of the first routing subproblem acts as the input for the second procurement optimization sub-problem. Hence, these two modules act in tandem until a final procurement cost is obtained.

In the present disclosure, the system and the method accurately determine the allocations of various external sources while considering the cost and market price risk for an enterprise demand without even knowing the complete information of the enterprise demand due to unknown EV routes and charge requirements, thereby eliminating the dependance on the prior information of the enterprise demand. The system uses an iterative technique in which the system first computes the optimal routes and then uses the optimal route information to compute the allocations for meeting demand and the average procurement cost of the enterprise until the system obtains the optimal procurement cost. Thus, the use of the iterative technique reduces the complexity of the problem from mixed integer non-linear programming (MINLP) to Mixed integer quadratic programming (MIQP) problem, thereby making the problem becomes more tractable.

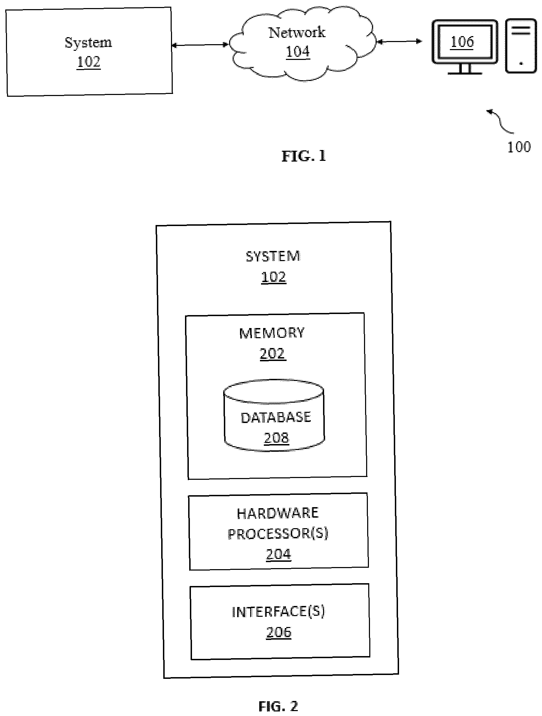

Referring now to the drawings, and more particularly to FIGS. 1 through 5, where similar reference characters denote corresponding features consistently throughout the figures, there are shown preferred embodiments and these embodiments are described in the context of the following exemplary system and/or method.

The notations used for describing FIGS. 1 through 4C are mentioned below.

| Symbols | Definitions |
| --- | --- |
| $m$ | Number of customer nodes |
| $o$ | Number of third party charging stations |
| $n$ | Number of third party discharging stations |
| $Z + 1$ | Number of enterprise nodes |
| | |

| Sets | Definitions |
| --- | --- |
| $X$ | Set of EVs available with the enterprise |
| $\mathcal{K}$ | Set of customer nodes |
| $\mathcal{F}$ | Set of charging nodes |
| $\mathcal{P}$ | Set of discharging nodes |
| $\mathcal{A}$ | Set of enterprise nodes |
| $\mathcal{V}$ | Set of all nodes, $\mathcal{V} = \{v_\phi\} \cup \mathcal{K} \cup \mathcal{F} \cup \mathcal{P} \cup \mathcal{A}$ |
| $\mathcal{S}_i$ | Number of supply options available at $i^{th}$ enterprise $\mathcal{S}_i$ $= \{\mathcal{M}, \mathcal{R}, pv_{ex}, pv_{in}\}$ |

(continued)

| Sets | Definitions |
|---|---|
| $\mathcal{M}$ | Set of electricity markets |
| $\mathcal{R}$ | Set of retailers |
| $pv_{ex}, pv_{in}$ | External and internal PV generation sources |
| $\mathcal{T}$ | Set of time intervals for market trading |
| | |

| Variables | Definitions |
|---|---|
| $\alpha_{ij}^u$ | Variable to decide EV traversal, =1 if edge ij is traversed by EV u |
| $\tau_i^u$ | Time-of-arrival of EV u at node i |
| $\theta_i^u$ | Battery level of EV u on arrival at node i |
| $\lambda_i^u$ | Remaining cargo of EV u on arrival at node i |
| $t_{ci}^u, t_{di}^u$ | EV charging and discharging times at a charging and discharging station respectively |
| $ev_{ci}^u(t), ev_{di}^u(t)$ | EV charging and discharging at the enterprise i at time t |
| $s_i(t)$ | Power allocation to different supply sources at node i at time t |
| $bc_i^b(t), bd_i^b(t)$ | Charging and discharging of battery b at time t |
| $\theta_i^b(t)$ | SoC level of battery b at node i at time t |
| $\beta_i^u(t)$ | Availability of EV u for charging/discharging at enterprise i at time t, $\beta_i^u(t) \in \{0,1\}$ |
| $st_i^u, et_i^u$ | Availability of EV u for charging/discharging at the enterprise i at time t |
| $\theta_{Tr}^u$ | SoC at enterprise node for EV u |
| $\theta^{u*}$ | Given minimum SOC requirement for EV u obtained from routing sub-problem |
| | |

| Parameters | Definition |
|---|---|
| $C(t)^T$ | Cost of procurement per kWh from multiple sources available at the enterprise |
| $C_{deg}^b$ | Degradation cost of enterprise battery |
| $\sigma^m(t)$ | Market price variance risk |
| $C_{c_i}, C_{d_i}$ | Costs of procurements from third party charging and discharging nodes |
| $C_{deg}^u$ | Degradation cost of the EV battery |
| $D_i(t)$ | Enterprise demand |
| $C_{pr}$ | Calculated procurement cost |
| | |

FIG. 1 illustrates an exemplary representation of an environment 100 related to at least some example embodiments of the present disclosure. Although the environment 100 is presented in one arrangement, other embodiments may include the parts of the environment 100 (or other parts) arranged otherwise depending on, for example, modelling set of constraints, solving objective functions, computing average procurement cost, etc. The environment 100 generally includes a system 102, a source system 106, each coupled to, and in communication with (and/or with access to) a network 104.

The network 104 may include, without limitation, a light fidelity (Li-Fi) network, a local area network (LAN), a wide area network (WAN), a metropolitan area network (MAN), a satellite network, the Internet, a fiber optic network, a coaxial cable network, an infrared (IR) network, a radio frequency (RF) network, a virtual network, and/or another suitable public and/or private network capable of supporting communication among two or more of the parts or users illustrated in FIG. 1, or any combination thereof.

Various entities in the environment 100 may connect to the network 104 in accordance with various wired and wireless communication protocols, such as Transmission Control Protocol and Internet Protocol (TCP/IP), User Datagram Protocol (UDP), 2nd Generation (2G), 3rd Generation (3G), 4th Generation (4G), 5th Generation (5G) communication protocols, Long Term Evolution (LTE) communication protocols, or any combination thereof.

The source system 106 is associated with an enterprise/organization having a fleet of electric vehicles (EVs). The enterprise/organization is looking for a power procurement strategy to be followed for optimal power procurement from available energy sources. In particular, the strategy that may reduce energy purchase cost of the enterprise, and associated price risk from each external energy source while meeting an energy demand of the enterprise. In an embodiment, the external energy sources include, but are not limited to, retailers, energy markets, and third party renewables. Examples of the source system 106 include, but are not limited to, a personal computer (PC), a mobile phone, a tablet device, a Personal Digital Assistant (PDA), a server, a voice activated assistant, a smartphone, and a laptop.

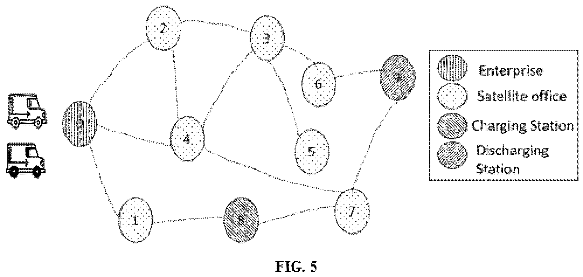

The system 102 includes one or more hardware processors and a memory. The system 102 is first configured to receive a plurality of inputs via the network 104 from the source system 106. The plurality of inputs comprise one or more of a number of nodes, a number of EVs, node details of each node, a distance matrix, an average procurement cost, one or more EV parameters, one or more cost parameters, an enterprise demand data, an enterprise generation data, and external generation data. In an embodiment, the nodes refer to entities to which the enterprise wants to deliver goods and services. In at least one example embodiment, the enterprise itself is considered as a node in a route followed by each EV for delivering goods and services. An example representation of nodes and routes followed by EVs is shown with reference to FIG. 5.

Then, the system 102 performs a route optimization by modelling a set of routing constraints which are then used along with the plurality of inputs to obtain one or more optimal EV routes and values of one or more variables at the one or more optimal EV routes. The one or more optimal EV routes may minimize the energy cost of charging the EV fleet to deliver both goods as well as energy to customers.

Thereafter, the system 102 performs a procurement cost optimization by modelling a set of procurement constraints which are then used along with the plurality of inputs, the one or more optimal EV routes and the values of the one or more variables at the one or more optimal EV routes to obtain an allocation information of each external energy source and a total cost of energy procurement. Further, the system 102 estimates an updated average procurement cost based on the allocation information of each external energy source and the total cost of energy procurement which is then compared with the initially considered average procurement cost to see whether a cost difference between the initial and the updated average procurement cost is less than a predefined tolerance value or not. The system 102 keeps iterating the process until the cost difference is found to be less than the predefined tolerance value. The value of the updated average procurement cost obtained at the end of the iterative process is considered as a final procurement cost of charging EVs and meeting enterprise demand.

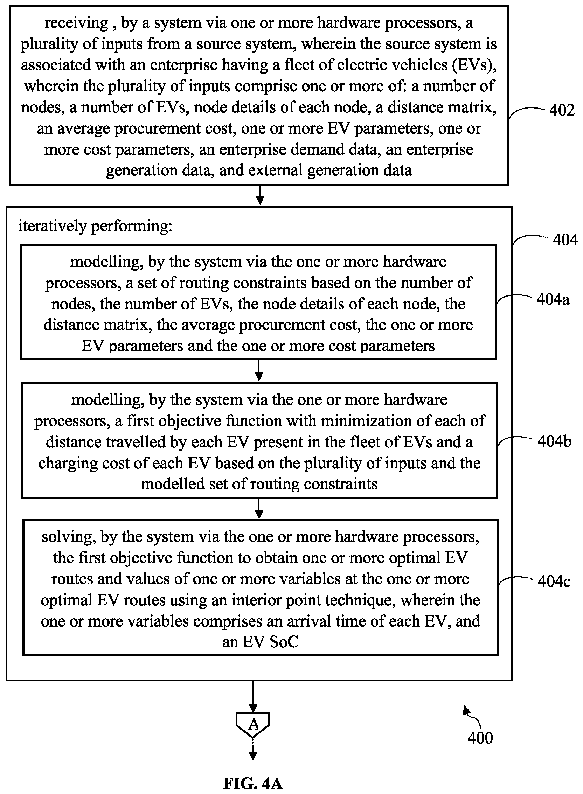

The process of estimating average procurement cost is explained in detail with reference to FIGS. 4A-4C.

The number and arrangement of systems, devices, and/or networks shown in FIG. 1 are provided as an example. There may be additional systems, devices, and/or networks; fewer systems, devices, and/or networks; different systems, devices, and/or networks; and/or differently arranged systems, devices, and/or networks than those shown in FIG. 1. Furthermore, two or more systems or devices shown in FIG. 1 may be implemented within a single system or device, or a single system or device shown in FIG. 1 may be implemented as multiple, distributed systems or devices. Additionally, or alternatively, a set of systems (e.g., one or more systems) or a set of devices (e.g., one or more devices) of the environment 100 may perform one or more functions described as being performed by another set of systems or another set of devices of the environment 100 (e.g., refer scenarios described above).

FIG. 2 illustrates an exemplary block diagram of the system 102 for optimizing power procurement for enterprises with electric vehicle fleet charging load, in accordance with an embodiment of the present disclosure. In some embodiments, the system 102 is embodied as a cloud-based and/or SaaS-based (software as a service) architecture. In some embodiments, the system 102 may be implemented in a server system. In some embodiments, the system 102 may be implemented in a variety of computing systems, such as laptop computers, notebooks, hand-held devices, workstations, mainframe computers, and the like.

In an embodiment, the system 102 includes one or more processors 204, communication interface device(s) or input/output (I/O) interface(s) 206, and one or more data storage devices or memory 202 operatively coupled to the one or more processors 204. The one or more processors 204 may be one or more software processing modules and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 102 can be implemented in a variety of computing systems, such as laptop computers, notebooks, hand-held devices, workstations, mainframe computers, servers, a network cloud and the like.

The I/O interface device(s) 206 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 202 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment a database 208 can be stored in the memory 202, wherein the database 208 may comprise, but are not limited to, a predefined tolerance value, a set of routing constraints, a set of procurement constraints, an interior point technique, one or more processes and the like. The memory 202 further comprises (or may further comprise) information pertaining to input(s)/output(s) of each step performed by the systems and methods of the present disclosure. In other words, input(s) fed at each step and output(s) generated at each step are comprised in the memory 202 and can be utilized in further processing and analysis.

It is noted that the system 102 as illustrated and hereinafter described is merely illustrative of an apparatus that could benefit from embodiments of the present disclosure and, therefore, should not be taken to limit the scope of the present disclosure. It is noted that the system 102 may include fewer or more components than those depicted in FIG. 2.

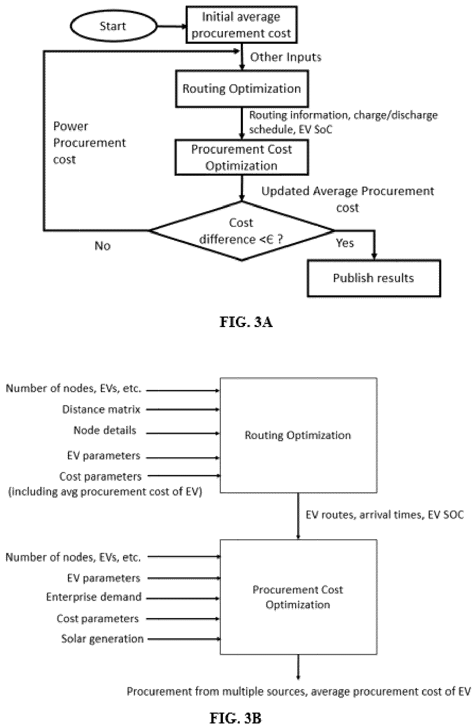

FIG. 3A illustrates a flow diagram representation of an estimation process performed by the system 102 for estimating an average procurement cost for the enterprise having a fleet of EVs, in accordance with an embodiment of the present disclosure.

As seen in FIG. 3A, the system 102 first receives a plurality of inputs and an initial average procurement cost as input. The system 102 then passes the plurality of inputs and the initial average procurement cost to a routing optimization block which utilizes the received information for estimating one or more optimal EV routes (also referred as routing information) and the values of one or more variables at the one or more optimal EV routes. In an embodiment, the one or more variables refers to arrival time of each EV, EV charge/discharge schedule and EV state of charge at the time of arrival at each nodes. Thereafter, the system 102 provides the one or more optimal EV routes and the values of one or more variables to a procurement cost optimization block that utilizes the received information along with the other inputs to obtain an updated average procurement cost. The plurality of inputs that are being provided to each of the routing optimization block and the procurement cost optimization block are shown with reference to FIG. 3B.

Further, the system 102 computes a cost difference between the initial average procurement cost and the updated average procurement cost. If the cost difference is found to be less than a predefined tolerance value, the system considers the updated average procurement cost as a final procurement cost. Else, the system 102 provides the updated average procurement cost to the routing optimization block to repeat the whole process again until the cost difference is found to be within the predefined tolerance value. The process of estimating the average procurement cost is explained in detail with reference to FIG. 4A-4C.

Once the final procurement cost is available, the system 102 provides the final procurement cost to the source system 106.

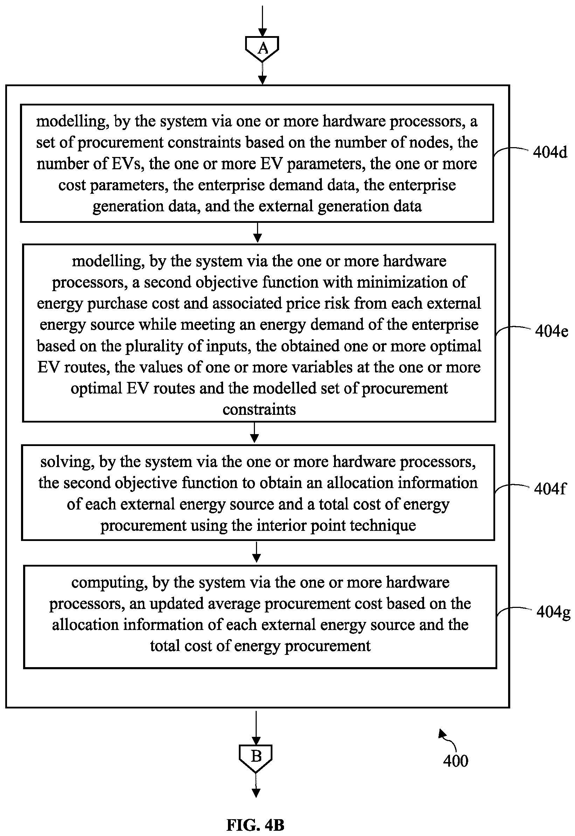

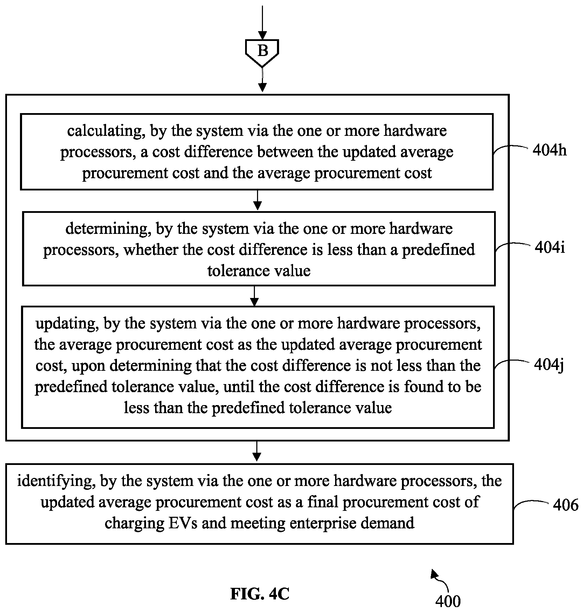

FIGS. 4A, 4B and 4C, collectively, with reference to FIGS. 1 to 3, represent an exemplary flow diagram of a method 400 for optimizing power procurement for enterprises with electric vehicle fleet charging load, in accordance with an embodiment of the present disclosure. The method 400 may use the system 102 of FIGS. 1 and 2 for execution. In an embodiment, the system 102 comprises one or more data storage devices or the memory 202 operatively coupled to the one or more hardware processors 204 and is configured to store instructions for execution of steps of the method 400 by the one or more hardware processors 204. The sequence of steps of the flow diagram may not be necessarily executed in the same order as they are presented. Further, one or more steps may be grouped together and performed in form of a single step, or one step may have several sub-steps that may be performed in parallel or in sequential manner. The steps of the method of the present disclosure will now be explained with reference to the components of the system 102 as depicted in FIG. 2 and FIG. 1.

At step 402 of the present disclosure, the one or more hardware processors 204 of the system 102 receive a plurality of inputs from the source system 106. In an embodiment, the source system 106 is associated with an enterprise having a fleet of EVs. The plurality of inputs comprises one or more of the number of nodes, the number of EVs, the node details of each node, the distance matrix, the average procurement cost (also referred as the initial average procurement cost), the one or more EV parameters, the one or more cost parameters, the enterprise demand data, the enterprise generation data, and the external generation data.

At step 404 of the present disclosure, the one or more hardware processors 204 of the system 102 computes an updated average procurement cost by iteratively performing a plurality of steps 404a through 404j until a cost difference between the average procurement cost and the updated average procurement cost is found to be less than the predefined tolerance value.

More specifically, at step 404a of the present disclosure, the one or more hardware processors 204 of the system 102 model a set of routing constraints based on the number of nodes, the number of EVs, the node details of each node, the distance matrix, the average procurement cost, the one or more EV parameters and the one or more cost parameters.

In an embodiment, the set of routing constraints comprises a customer node visit constraint, an EV entry-exit constraint, a time feasibility constraint, a customer node state-of-charge (SoC) feasibility constraint, a charging node SoC feasibility constraint, a discharging node SoC feasibility constraint, a demand fulfilment constraint, a time-window constraint, an EV carrying capacity constraint, an EV charging time constraint, and an EV discharging time constraint.

In at least one example embodiment, the customer node visit constraint is modelled to ensure that every customer/node is visited exactly once by one of the EVs in the EV fleet of the enterprise, while making the visit to any of the node optional. The customer node visit constraint is represented as:

$$\sum_{u \in \mathcal{X}} \sum_{j \in \mathcal{V}, i \neq j} \alpha_{ij}^u = 1, \forall i \in \mathcal{K} \qquad \dots \text{equation (1)}$$

In an embodiment, the EV entry-exit constraint is modelled to establish flow conservation. In particular, it ensures that the number of incoming EVs at a node is equal to the number of outgoing EVs at the respective node. The EV entry-exit constraint is represented as:

$$\sum_{j \in \mathcal{V}, i \neq j} \alpha_{ij}^u = \sum_{k \in \mathcal{V}, i \neq j} \alpha_{ji}^u \ \forall j \in \mathcal{V}, \forall u \in \mathcal{X} \qquad \dots \text{equation (2)}$$

In an embodiment, the time feasibility constraint is modelled to guarantee time feasibility of EVs. The time feasibility constraint is represented as:

$$\tau_i^u + (t_{ij} + t_i)\alpha_{ij}^u - l_0(1 - \alpha_{ij}^u) \leq \tau_j^u, \forall j \in \mathcal{V}, \forall u \in \mathcal{X} \qquad \dots \text{equation (3)}$$

$$t_i = t_{si}, \forall i \in \mathcal{K}$$

$$t_i = \zeta_i^u, \forall i \in \mathcal{F}$$

$$t_i = \gamma_i^u, \forall i \in \mathcal{p}$$

$$t_i = \eta_i^u, \forall i \in \mathcal{A}$$

Where, $t_{ij}$ represents a time taken for traversal of nodes from *i* to *j*,
$t_s$, $\zeta$, $\gamma$ and $\eta$ represent service time at customer nodes, charging nodes, discharging nodes and enterprise nodes, respectively.

In an embodiment, the customer node SoC feasibility constraint is modelled to enforce SoC feasibility for EVs leaving customer node. The customer node SoC feasibility constraint is represented as:

$$0 \leq \theta_j^u \leq \theta_i^u - (H.d_{ij})\alpha_{ij}^u + Q(1 - \alpha_{ij}^u) \ \forall \ i \in \mathcal{K}, \forall j \in \mathcal{V}, \forall u \in \mathcal{X}, i \neq j$$

$$\dots \text{equation (4)}$$

Where, *H* represents the consumption rate of an EV or charge required for travelling per KM distance,

$d_{ij}$ represents a distance between the nodes $i$ and $j$, and
$Q$ represents energy capacity of an EV.

In an embodiment, the charging node SoC feasibility constraint is modelled to enforce SoC feasibility for EVs leaving charging nodes. The charging node SoC feasibility constraint is represented as:

$$0 \leq \theta_j^u \leq \theta_i^u - \left(H.d_{ij} - R_{c_i}^u t_{c_i}^u\right)\alpha_{ij}^u + Q\left(1 - \alpha_{ij}^u\right)\forall i \in \mathcal{F}, \forall j \in \mathcal{V}, \forall u \in \mathcal{X}, i \neq j$$

…equation (5)

In an embodiment, the discharging node SoC feasibility constraint is modelled to enforce SoC feasibility for EVs leaving discharging nodes. The discharging node SoC feasibility constraint is represented as:

$$0 \leq \theta_j^u \leq \theta_i^u - \left(H.d_{ij} - R_{d_i}^u t_{d_i}^u\right)\alpha_{ij}^u + Q\left(1 - \alpha_{ij}^u\right)\forall i \in \mathscr{p}, \forall j \in \mathcal{V}, \forall u \in \mathcal{X}, i \neq j$$

…equation (6)

In an embodiment, the demand fulfilment constraint is modelled to ensure demand fulfilment of all customers awaiting order delivery. The demand fulfilment constraint is represented as:

$$0 \leq \lambda_j^u \leq \lambda_i^u - c_i \cdot \alpha_{ij}^u + GC^u \cdot \left(1 - \alpha_{ij}^u\right)\forall i,j \in \mathcal{V}, \forall u \in \mathcal{X} \qquad \text{…equation}$$

$$(7),$$

Where, $c_i$ represents goods demand required at each customer node, and
$GC^u$ represents total goods carrying capacity of EV u.
In an embodiment, the time-window constraint is modelled to ensure that each node must be visited within its preferred time window. In particular, it ensures that EV must visit each node between the specified earliest and latest start time. The time-window constraint is represented as:

$$t_{e_i} \cdot \sum_{j \in \mathcal{V}} \alpha_{ij}^u \leq \tau_i^u \leq t_{l_i} \cdot \sum_{j \in \mathcal{V}} \alpha_{ij}^u \; \forall i \in \mathcal{K}, \forall u \in \mathcal{X} \qquad \text{…equation (8)}$$

Where, $t_{e_i}$ represents earliest time of start of service at a node, and
$t_{l_i}$ represents latest start time of service at a node.
In an embodiment, the EV carrying capacity constraint is modelled to ensure that total goods carried by the EVs is equal to a total demand from the customers. The EV carrying capacity constraint is represented as:

$$\sum_{u \in \mathcal{X}} \sum_{i \in \mathcal{K}} \lambda_i^u = \sum_{i \in \mathcal{K}} c_i \qquad \text{…equation (9)}$$

In an embodiment, the EV charging time constraint is modelled to ensure that the charging time of each EV should not exceed the service time at a charging node. The EV charging time constraint is represented as:

$$t_{ci}^u \leq \zeta_i^u \sum_{j \in \mathcal{V}} \alpha_{ij}^u, \forall i \in \mathcal{F}, \forall u \in \mathcal{X} \qquad \text{…equation (10)}$$

In an embodiment, the EV discharging time constraint is modelled to ensure that the discharging time of an EV should not exceed the service time at a discharging node. The EV discharging time constraint is represented as:

$$t_{di}^u \leq \gamma_i^u \sum_{j \in \mathcal{V}} \alpha_{ij}^u, \forall i \in \mathcal{P}, \forall u \in \mathcal{X} \qquad \text{…equation (11)}$$

At step 404b of the present disclosure, the one or more hardware processors 204 of the system 102 model a first objective function with minimization of each of distance travelled by each EV present in the fleet of EVs and a charging cost of each EV based on the plurality of inputs and the modelled set of routing constraints. In particular, the first objective function is modelled to minimize the distance travelled by EVs and the charging cost while satisfying all the modelled set of routing constraints. The first objective function is represented as:

$$\min \sum_{i\in\mathcal{V}}\sum_{j\in\mathcal{V}}\sum_{u\in\mathcal{X}} d_{i,j}\,\alpha_{i,j}^u + C_{pr}\theta_i^u(0) + \sum_{u\in\mathcal{X}}\sum_{i\in\mathcal{F}} C_{ci}\,R_{ci}^u t_{ci}^u + \sum_{u\in\mathcal{X}}\sum_{i\in\wp} C_{di}R_{di}^u t_{di}^u$$

...equation (12)

At step 404c of the present disclosure, the one or more hardware processors 204 of the system 102 solve the first objective function to obtain one or more optimal EV routes and values of one or more variables at the one or more optimal EV routes using an interior point technique. The one or more variables includes an arrival time of each EV, and a SoC of an EV.

At step 404d of the present disclosure, the one or more hardware processors 204 of the system 102 model a set of procurement constraints based on the number of nodes, the number of EVs, the one or more EV parameters, the one or more cost parameters, the enterprise demand data, the enterprise generation data, and the external generation data.

In an embodiment, the set of procurement constraints comprise a demand-supply balance constraint, a solar procurement constraint, battery SoC constraints, battery charging-discharging constraints, EV charging-discharging constraints, EV charging-discharging limit constraints, and a non-negativity constraint.

In at least one example embodiment, the demand-supply balance constraint is modelled to maintain the demand and supply balance of the enterprise. In particular, it ensures that the total power procured should be equal to the demand of the enterprise $D_i(t)$. The demand-supply balance constraint is represented as:

$$1^T s_i(t) + \left(bd_i^b(t) - bc_i^b(t)\right) + \sum_{u\in\mathcal{X}}\left(ev_{d_i}^u(t) - ev_{c_i}^u(t)\right) = D_i(t), \forall t \in$$

$$\mathcal{T}, i \in \mathcal{A} \qquad ...\text{equation (13)}$$

In an embodiment, the solar procurement constraints are modelled to limit the external third party and the internal captive solar photovoltaic procurements within their available generations $PVex_i^{max}$ and $PVin_i^{max}$, respectively.

The solar procurement constraints are represented as:

$$s_i^{pv_{ex}}(t) \le PVex_i^{max}(t), \forall t \in \mathcal{T}, i \in \mathcal{A} \qquad ...\text{equation (14)},$$

$$s_i^{pv_{in}}(t) \le PVin_i^{max}(t), \forall t \in \mathcal{T}, i \in \mathcal{A} \qquad ...\text{equation (15)}$$

In an embodiment, the battery SoC constraints are modelled to handle SoC of a static battery located at the enterprise. In at least one example embodiment, a first battery SoC constraint is responsible for updating the SoC at each time block and can be represented as:

$$bc_i^b(t) - bd_i^b(t) = \theta_i^b(t) - \theta_i^b(t-1), \forall t \in \mathcal{T}, i \in \mathcal{A} \qquad ...\text{equation (16)}$$

In at least one example embodiment, a second battery SoC constraint is responsible for maintaining the SoC within its prescribed limits $\left(\theta_i^b\right)^{min}$ and $\left(\theta_i^b\right)^{max}$, respectively. The second battery SoC constraint can be represented as:

$$\left(\theta_i^b\right)^{min} \le \theta_i^b(t) \le \left(\theta_i^b\right)^{max} \forall t \in \mathcal{T}, i \in \mathcal{A} \qquad ...\text{equation (17)}$$

In an embodiment, the battery charging-discharging constraints are modelled to handle complementarity of charging and discharging for the batteries, using binary variable $Z$. In particular, the battery charging-discharging constraints are modelled to ensure that the battery either charge/discharge at a given time block but not both simultaneously. The battery charging-discharging constraints are represented as:

$$bd_i^b(t) \leq R_d^b \times Z_t, \forall t \in \mathcal{T}, i \in \mathcal{A} \qquad \ldots\text{equation (18)},$$

and

$$bc_i^b(t) \leq R_c^b \times [1 - Z_t], \forall t \in \mathcal{T}, i \in \mathcal{A} \qquad \ldots \text{equation (19)}$$

Where, $\mathcal{T}$ represents a given trading time interval of a day during which EVs visiting an enterprise node can charge/-discharge.

In an embodiment, the EV charging-discharging constraints are modelled to handle complementarity of charging and discharging for the EVs, using binary variable $Y$. The EV charging-discharging constraints are represented as:

$$ev_{d_i}^u(t) \leq R_{d_i}^u \times Y_t^u, \forall t \in \mathcal{T}, i \in \mathcal{A}, u \in \mathcal{X} \qquad \ldots \text{equation (20)},$$

and

$$ev_{c_i}^u(t) \leq R_{c_i}^u \times [1 - Y_t^u], \forall t \in \mathcal{T}, i \in \mathcal{A}, u \in \mathcal{X} \qquad \ldots\text{equation (21)},$$

In an embodiment, the EV charging-discharging limit constraints are modelled to maintain the charging and discharging of the EV within its charging rate $R_{c_i}^u$ and discharging rate $R_{d_i}^u$, subject to the EV availability at that trading interval. The EV charging-discharging limit constraints are represented as:

$$ev_{c_i}^u(t) \leq R_{c_i}^u \times \beta_i^u(t), \forall t \in \mathcal{T}, i \in \mathcal{A}, u \in \mathcal{X} \qquad \ldots\text{equation (22)},$$

and

$$ev_{d_i}^u(t) \leq R_{d_i}^u \times \beta_i^u(t), \forall t \in \mathcal{T}, i \in \mathcal{A}, u \in \mathcal{X} \qquad \ldots\text{equation (23)},$$

Where, $\beta_i^u(t)$ represents a binary variable indicating availability of an EV at a given trading time interval.

In an embodiment, a value '1' of $\beta_i^u(t)$ represents that EV is available at node $i$ at time $t$ for charging/discharging and value '0' represents that EV is not available. In at least one example embodiment, the value of $\beta_i^u$ is computed for each EV using equations 24-26 mentioned below:

$$(24 \times 60/tb) \times st_i^u \geq \tau_i^u \forall \mathcal{A}, \forall u \in \mathcal{X} \ldots\text{equation (24)},$$

$$(24 \times 60/tb) \times et_i^u \leq \tau_i^u + \eta_i^u \forall i \in \mathcal{A}, \forall u \in \mathcal{X} \qquad \ldots\text{equation (25)},$$

and

$$\beta_i^u(t) = 1 \ \forall st_i^u \leq t \leq et_i^u, t \in \mathcal{T}, \forall u \in \mathcal{X} \qquad \ldots\text{equation (26)}$$

The equations 24-26 ensure that the EV should be present at enterprise nodes for integral multiple of trading time blocks.

In an embodiment, the non-negativity constraint is modelled to ensure that the decision variables are always non-negative. The non-negativity constraint is represented as:

$$ev_{c_i}^u(t), ev_{d_i}^u(t), bd_i^b(t), bc_i^b(t), s_i(t) \geq 0, \forall t \in \mathcal{T}, i \in \mathcal{A}$$

...equation (27)

At step 404e of the present disclosure, the one or more hardware processors 204 of the system 102 model a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes and the modelled set of procurement constraints. In particular, the second objective function is modelled to minimize the cost of energy purchased across various external energy sources while meeting the overall enterprise demand. The second objective function is represented as:

$$\min \sum_{i \in \mathcal{A}} \sum_{t \in \mathcal{T}} \left( C(t)^T s_i(t) + C_{deg}^b \left( bd_i^b(t) + bc_i^b(t) \right\} \right) + \frac{k}{2} \left( \sigma^m(t) \right)^2 \left( s^m(t) \right)^2 \right)$$

$$- \sum_{i \in \mathcal{P}} \sum_{u \in \mathcal{X}} \sum_{t \in \mathcal{T}_1} C_{di} R_{di}^u t_{di}^u + \sum_{i \in \mathcal{F}} \sum_{u \in \mathcal{X}} \sum_{t \in \mathcal{T}_1} C_{ci} R_{ci}^u t_{ci}^u$$

$$+ \sum_{u \in \mathcal{X}, t \in \mathcal{T}} C_{deg}^u \left( ev_{d_i}^u(t) + ev_{c_i}^u(t) \right)$$

...equation (28)

At step 404f of the present disclosure, the one or more hardware processors 204 of the system 102 solve the second objective function to obtain an allocation information of each external energy source and a total cost of energy procurement using the interior point technique.

In at least one example embodiment, as the EV state of charge at arrival at each node is available from the step 404a, the SoC gets updated from the procurement cost optimization and hence there are modification required in the SoC constraints. An updated initial EV SoC constraint is modelled to update the initial EV SoC using a routing SoC and energy charged or discharged from previous nodes to optimize the average procurement cost. The updated initial EV SoC constraint is referred as:

$$\theta_{init}^u(v) = \theta_{routing}^u(v) + \left( \theta^u(v-1) - \theta_{routing}^u(v-1) \right), v \in \mathcal{V}$$

...equation (29),

$$\theta^u(v) = \beta_{Ci}^u(v) * [\theta_{init}^u(v) + C_C(u,v)] - \beta_{Di}^u(v) * [\theta_{init}^u(v) + C_D(u,v)] +$$

$$\beta_i^u(v) * \left( \theta_{Tr}^u(i, tb) \right) \quad v \in \mathcal{V}, i \in \mathcal{A} \qquad \text{...equation (30),}$$

$$\theta_{Tr}^u(i,t) = \theta_{Tr}^u(i, t-1) + ev_{c_i}^u(t) - ev_{d_i}^u(t), t \in \mathcal{T}, i \in \mathcal{A} \qquad \text{...equation (31)}$$

$$\theta_{min}^u \leq \theta_{Tr}^u(i,t) \leq \theta_{max}^u, t \in \mathcal{T}, i \in \mathcal{A} \qquad \text{...equation (32),}$$

and

$$\theta^u(v) \geq \theta^{u^*}(v) \qquad \text{...equation (33),}$$

Where, $C_C$ represents volume of energy transacted at charging node, and $C_D$ represents volume of energy transacted at discharging node.

At step 404g of the present disclosure, the one or more hardware processors 204 of the system 102 compute an updated average procurement cost based on the allocation information of each external energy source and the total cost of energy procurement.

At step 404h of the present disclosure, the one or more hardware processors 204 of the system 102 calculate a cost difference between the updated average procurement cost and the average procurement cost. In particular, the cost difference between the initially considered average procurement cost and the computed updated average procurement cost is calculated at this step.

At step 404i of the present disclosure, the one or more hardware processors 204 of the system 102 determine whether the cost difference is less than a predefined tolerance value. In an embodiment, without limiting the scope of the invention, the predefined tolerance value is provided by the subject matter expert.

At step 404j of the present disclosure, the one or more hardware processors 204 of the system 102 update the average procurement cost as the updated average procurement cost upon determining that the cost difference is not less than the predefined tolerance value.

So, to obtain the optimal average procurement, the system 102 keeps on performing the steps 404a to 404j until the cost difference between the average procurement cost and the updated average procurement cost is found to be less than the predefined tolerance value.

At step 406 of the present disclosure, the one or more hardware processors 206 of the system 102 identify the updated average procurement cost as a final procurement cost of charging EVs and meeting enterprise demand. The system 102 then provides the allocation information of each external energy source and the final procurement cost to the source system 106.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

As discussed earlier, existing techniques available for joint optimization of EV routing and charging are not usable for enterprise with EV fleet charging loads as cost of electricity is assumed to be independent of the EV charging demand. Further, they require the total demand to be known a priori. So, to overcome the disadvantages, embodiments of the present disclosure provide a method and a system for optimizing power procurement for enterprises with electric vehicle fleet charging load. More specifically, the system and the method accurately determines the allocations of various sources while considering the cost and market price risk for an enterprise demand without even knowing the complete information of the enterprise demand due to unknown EV routes and charge requirements. The system uses an iterative technique in which the system first computes the optimal routes and then uses the optimal route information to compute the allocations for meeting demand and the average procurement cost of the enterprise until the system obtains the optimal procurement cost. Thus, the use of the iterative technique reduces the complexity of the problem from mixed integer non-linear programming (MINLP) to Mixed integer quadratic programming (MIQP) problem, thereby making the problem becomes more tractable

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (400), comprising:

   receiving (402), by a system via one or more hardware processors, a plurality of inputs from a source system, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and an external generation data;
   iteratively performing (404):

      modelling (404a), by the system via the one or more hardware processors, a set of routing constraints based on the number of nodes, the number of EVs, the node details of each node, the distance matrix, the average procurement cost, the one or more EV parameters, and the one or more cost parameters;
      modelling (404b), by the system via the one or more hardware processors, a first objective function with minimization of each of distance travelled by each EV present in the fleet of EVs and a charging cost of each EV based on the plurality of inputs and the modelled set of routing constraints;
      solving (404c), by the system via the one or more hardware processors, the first objective function to obtain one or more optimal EV routes and values of one or more variables at the one or more optimal EV routes using an interior point technique, wherein the one or more variables comprises an arrival time of each EV, and an EV State of Charge (SoC);
      modelling (404d), by the system via one or more hardware processors, a set of procurement constraints based on the number of nodes, the number of EVs, the one or more EV parameters, the one or more cost parameters, the enterprise demand data, the enterprise generation data, and the external generation data;
      modelling (404e), by the system via the one or more hardware processors, a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes, and the modelled set of procurement constraints;
      solving (404f), by the system via the one or more hardware processors, the second objective function to obtain an allocation information of each external energy source and a total cost of energy procurement using the interior point technique;
      computing (404g), by the system via the one or more hardware processors, an updated average procurement cost based on the allocation information of each external energy source and the total cost of energy procurement;
      calculating (404h), by the system via the one or more hardware processors, a cost difference between the updated average procurement cost and the average procurement cost;
      determining (404i), by the system via the one or more hardware processors, whether the cost difference is less than a predefined tolerance value; and

upon determining that the cost difference is not less than the predefined tolerance value, updating (404j), by the system via the one or more hardware processors, the average procurement cost as the updated average procurement cost,

until the cost difference is found to be less than the predefined tolerance value; and

identifying (406), by the system via the one or more hardware processors, the updated average procurement cost as a final procurement cost of charging EVs and meeting enterprise demand.

2. The processor implemented method (400) as claimed in claim 1, comprising:

providing, by the system via the one or more hardware processors, the allocation information of each external energy source and the final procurement cost to the source system.

3. The processor implemented method (400) as claimed in claim 1, wherein the modelled set of routing constraints comprise a customer node visit constraint, an EV entry-exit constraint, a time feasibility constraint, a customer node SoC feasibility constraint, a charging node SoC feasibility constraint, a discharging node SoC feasibility constraint, a demand fulfilment constraint, a time-window constraint, an EV carrying capacity constraint, an EV charging time constraint, and an EV discharging time constraint.

4. The processor implemented method (400) as claimed in claim 1, wherein the modelled set of procurement constraints comprise a demand-supply balance constraint, solar procurement constraints, battery SoC constraints, battery charging-discharging constraints, EV charging-discharging constraints, EV charging-discharging limit constraints, and a non-negativity constraint.

5. A system (102), comprising:

a memory (202) storing instructions;
one or more communication interfaces (206); and
one or more hardware processors (204) coupled to the memory (202) via the one or more communication interfaces (206), wherein the one or more hardware processors (204) are configured by the instructions to:

receive a plurality of inputs from a source system, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and external generation data;
iteratively perform:

model a set of routing constraints based on the number of nodes, the number of EVs, the node details of each node, the distance matrix, the average procurement cost, the one or more EV parameters and the one or more cost parameters;
model a first objective function with minimization of each of distance travelled by each EV present in the fleet of EVs and a charging cost of each EV based on the plurality of inputs and the modelled set of routing constraints;
solve the first objective function to obtain one or more optimal EV routes and values of one or more variables at the one or more optimal EV routes using an interior point technique, wherein the one or more variables comprises an arrival time of each EV, and an EV State of Charge (SoC);
model a set of procurement constraints based on the number of nodes, the number of EVs, the one or more EV parameters, the one or more cost parameters, the enterprise demand data, the enterprise generation data, and the external generation data;
model a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes and the modelled set of procurement constraints;
solve the second objective function to obtain an allocation information of each external energy source and a total cost of energy procurement using the interior point technique;
compute an updated average procurement cost based on the allocation information of each external energy source and the total cost of energy procurement;

calculate a cost difference between the updated average procurement cost and the average procurement cost;

determine whether the cost difference is less than a predefined tolerance value; and

upon determining that the cost difference is not less than the predefined tolerance value, update the average procurement cost as the updated average procurement cost,

until the cost difference is found to be less than the predefined tolerance value; and

identify the updated average procurement cost as a final procurement cost of charging EVs and meeting enterprise demand.

6. The system as claimed in claim 5, wherein the one or more hardware processors (204) are configured by the instructions to:

provide the allocation information of each external energy source and the final procurement cost to the source system.

7. The system as claimed in claim 5, wherein the modelled set of routing constraints comprise a customer node visit constraint, an EV entry-exit constraint, a time feasibility constraint, a customer node SoC feasibility constraint, a charging node SoC feasibility constraint, a discharging node SoC feasibility constraint, a demand fulfilment constraint, a time-window constraint, an EV carrying capacity constraint, an EV charging time constraint, and an EV discharging time constraint.

8. The system as claimed in claim 5, wherein the modelled set of procurement constraints comprise a demand-supply balance constraint, solar procurement constraints, battery SoC constraints, battery charging-discharging constraints, EV charging-discharging constraints, EV charging-discharging limit constraints, and a non-negativity constraint.

9. One or more non-transitory machine-readable information storage mediums comprising one or more instructions which when executed by one or more hardware processors cause:

receiving, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and an external generation data;

iteratively performing:

modelling, a set of routing constraints based on the number of nodes, the number of EVs, the node details of each node, the distance matrix, the average procurement cost, the one or more EV parameters, and the one or more cost parameters;

modelling, a first objective function with minimization of each of distance travelled by each EV present in the fleet of EVs and a charging cost of each EV based on the plurality of inputs and the modelled set of routing constraints;

solving, the first objective function to obtain one or more optimal EV routes and values of one or more variables at the one or more optimal EV routes using an interior point technique, wherein the one or more variables comprises an arrival time of each EV, and an EV State of Charge (SoC);

modelling, a set of procurement constraints based on the number of nodes, the number of EVs, the one or more EV parameters, the one or more cost parameters, the enterprise demand data, the enterprise generation data, and the external generation data;

modelling, a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes, and the modelled set of procurement constraints;

solving, the second objective function to obtain an allocation information of each external energy source and a total cost of energy procurement using the interior point technique;

computing, an updated average procurement cost based on the allocation information of each external energy source and the total cost of energy procurement;

calculating, a cost difference between the updated average procurement cost and the average procurement cost;

determining, whether the cost difference is less than a predefined tolerance value; and

upon determining that the cost difference is not less than the predefined tolerance value, updating the average procurement cost as the updated average procurement cost,
until the cost difference is found to be less than the predefined tolerance value; and

identifying, the updated average procurement cost as a final procurement cost of charging EVs and meeting enterprise demand.

10. The one or more non-transitory machine-readable information storage mediums of claim 9, comprising: providing the allocation information of each external energy source and the final procurement cost to the source system.

11. The one or more non-transitory machine-readable information storage mediums of claim 9, wherein the modelled set of routing constraints comprise a customer node visit constraint, an EV entry-exit constraint, a time feasibility constraint, a customer node SoC feasibility constraint, a charging node SoC feasibility constraint, a discharging node SoC feasibility constraint, a demand fulfilment constraint, a time-window constraint, an EV carrying capacity constraint, an EV charging time constraint, and an EV discharging time constraint.

12. The one or more non-transitory machine-readable information storage mediums of claim 9, wherein the modelled set of procurement constraints comprise a demand-supply balance constraint, solar procurement constraints, battery SoC constraints, battery charging-discharging constraints, EV charging-discharging constraints, EV charging-discharging limit constraints, and a non-negativity constraint.

**FIG. 1**

100

SYSTEM
102

MEMORY
202

DATABASE
208

HARDWARE
PROCESSOR(S)
204

INTERFACE(S)
206

**FIG. 2**

FIG. 3A

FIG. 3B

receiving , by a system via one or more hardware processors, a plurality of inputs from a source system, wherein the source system is associated with an enterprise having a fleet of electric vehicles (EVs), wherein the plurality of inputs comprise one or more of: a number of nodes, a number of EVs, node details of each node, a distance matrix, an average procurement cost, one or more EV parameters, one or more cost parameters, an enterprise demand data, an enterprise generation data, and external generation data

⌐ 402

iteratively performing:

⌐ 404

modelling, by the system via the one or more hardware processors, a set of routing constraints based on the number of nodes, the number of EVs, the node details of each node, the distance matrix, the average procurement cost, the one or more EV parameters and the one or more cost parameters

⌐ 404a

modelling, by the system via the one or more hardware processors, a first objective function with minimization of each of distance travelled by each EV present in the fleet of EVs and a charging cost of each EV based on the plurality of inputs and the modelled set of routing constraints

⌐ 404b

solving, by the system via the one or more hardware processors, the first objective function to obtain one or more optimal EV routes and values of one or more variables at the one or more optimal EV routes using an interior point technique, wherein the one or more variables comprises an arrival time of each EV, and an EV SoC

⌐ 404c

A

400

**FIG. 4A**

A

modelling, by the system via one or more hardware processors, a set of procurement constraints based on the number of nodes, the number of EVs, the one or more EV parameters, the one or more cost parameters, the enterprise demand data, the enterprise generation data, and the external generation data — 404d

modelling, by the system via the one or more hardware processors, a second objective function with minimization of energy purchase cost and associated price risk from each external energy source while meeting an energy demand of the enterprise based on the plurality of inputs, the obtained one or more optimal EV routes, the values of one or more variables at the one or more optimal EV routes and the modelled set of procurement constraints — 404e

solving, by the system via the one or more hardware processors, the second objective function to obtain an allocation information of each external energy source and a total cost of energy procurement using the interior point technique — 404f

computing, by the system via the one or more hardware processors, an updated average procurement cost based on the allocation information of each external energy source and the total cost of energy procurement — 404g

B

400

**FIG. 4B**

```
                              ┌───┐
                              │ B │
                              └───┘
                                │
  ┌─────────────────────────────────────────────────────────────┐
  │  ┌───────────────────────────────────────────────────────┐  │
  │  │  calculating, by the system via the one or more        │  │      404h
  │  │  hardware processors, a cost difference between the     │──┼──
  │  │  updated average procurement cost and the average      │  │
  │  │  procurement cost                                      │  │
  │  └───────────────────────────────────────────────────────┘  │
  │                            │                                 │
  │  ┌───────────────────────────────────────────────────────┐  │
  │  │  determining, by the system via the one or more        │  │      404i
  │  │  hardware processors, whether the cost difference is    │──┼──
  │  │  less than a predefined tolerance value                │  │
  │  └───────────────────────────────────────────────────────┘  │
  │                            │                                 │
  │  ┌───────────────────────────────────────────────────────┐  │
  │  │  updating, by the system via the one or more hardware  │  │
  │  │  processors, the average procurement cost as the       │  │      404j
  │  │  updated average procurement cost, upon determining     │──┼──
  │  │  that the cost difference is not less than the          │  │
  │  │  predefined tolerance value, until the cost difference  │  │
  │  │  is found to be less than the predefined tolerance value│  │
  │  └───────────────────────────────────────────────────────┘  │
  └─────────────────────────────────────────────────────────────┘
                               │
  ┌─────────────────────────────────────────────────────────────┐
  │  identifying, by the system via the one or more hardware     │         406
  │  processors, the updated average procurement cost as a       │────
  │  final procurement cost of charging EVs and meeting          │
  │  enterprise demand                                           │
  └─────────────────────────────────────────────────────────────┘
```

**FIG. 4C**                              400

FIG. 5

Europäisches
Patentamt

European
Patent Office

Office européen
des brevets

## EUROPEAN SEARCH REPORT

**Application Number**

EP 25 15 9647

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SHAHKAMRANI ARIAN ET AL: "A framework for day-ahead optimal charging scheduling of electric vehicles providing route mapping: Kowloon case study", JOURNAL OF CLEANER PRODUCTION, vol. 307, 1 July 2021 (2021-07-01), page 127297, XP093123134, AMSTERDAM, NL ISSN: 0959-6526, DOI: 10.1016/j.jclepro.2021.127297 * page 2; figures 1-4 * * page 9, column 2, paragraph 1 * * paragraph [0010] * * page 11, column 1, paragraph 1 - paragraph 5 * | 1-12 | INV. G01C21/34 G06Q10/04 G06Q10/047 G06Q10/0631 G06Q50/06 G06Q50/40 |
| A | US 2023/038368 A1 (BALALI MOHAMMAD [US] ET AL) 9 February 2023 (2023-02-09) * paragraph [0103] - paragraph [0150]; figure 2 * | 1-12 | |
| A | ABDULAAL AHMED ET AL: "Solving the Multivariant EV Routing Problem Incorporating V2G and G2V Options", IEEE TRANSACTIONS ON TRANSPORTATION ELECTRIFICATION, IEEE, vol. 3, no. 1, 1 March 2017 (2017-03-01), pages 238-248, XP011642294, DOI: 10.1109/TTE.2016.2614385 [retrieved on 2017-03-02] * the whole document * | 1-12 | TECHNICAL FIELDS SEARCHED (IPC) G06Q G01C |

The present search report has been drawn up for all claims

| Place of search | Date of completion of the search | Examiner |
|---|---|---|
| Munich | 17 June 2025 | Koblitz, Birger |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**ANNEX TO THE EUROPEAN SEARCH REPORT
ON EUROPEAN PATENT APPLICATION NO.**

EP 25 15 9647

This annex lists the patent family members relating to the patent documents cited in  the above-mentioned European search report.
The members are as contained in the European Patent Office EDP file on
The European Patent Office is in no way liable for these particulars which are merely given for the purpose of information.

17-06-2025

| Patent document cited in search report | Publication date | Patent family member(s) | | Publication date |
|---|---|---|---|---|
| US 2023038368 A1 | 09-02-2023 | US | 2023038368 A1 | 09-02-2023 |
| | | US | 2023045381 A1 | 09-02-2023 |
| | | WO | 2023015007 A1 | 09-02-2023 |

EPO FORM P0459

For more details about this annex : see Official Journal of the European Patent Office, No. 12/82

**REFERENCES CITED IN THE DESCRIPTION**

**Patent documents cited in the description**

- IN 202421014307